(19) Europäisches Patentamt
European Patent Office
Office européen des brevets

(11) Veröffentlichungsnummer: **0 404 724 B1**

(12) **EUROPÄISCHE PATENTSCHRIFT**

(45) Veröffentlichungstag der Patentschrift: **27.12.95**

(51) Int. Cl.[6]: **C08G 65/40**, C08L 71/12

(21) Anmeldenummer: **90810435.9**

(22) Anmeldetag: **14.06.90**

# (54) Polyarylenether

(30) Priorität: **23.06.89 CH 2343/89**
**23.03.90 CH 964/90**

(43) Veröffentlichungstag der Anmeldung:
**27.12.90 Patentblatt 90/52**

(45) Bekanntmachung des Hinweises auf die Patenterteilung:
**27.12.95 Patentblatt 95/52**

(84) Benannte Vertragsstaaten:
**DE ES FR GB IT NL SE**

(56) Entgegenhaltungen:
**EP-A- 0 322 151**
**US-A- 3 524 833**

**Derwent Publications Ltd., London, GB; DATABASE WPIL, AN=87-224374, & JP-A-62148523 (TORAY IND INC) 02.07.1987 (Kat.D)**

(73) Patentinhaber: **SUMITOMO CHEMICAL COMPANY, LIMITED**
**5-33, Kitahama 4-chome**
**Chuo-ku**
**Osaka (JP)**

(72) Erfinder: **Pfaendner, Rudolf, Dr.**
**Sackgasse 3**
**D-6149 Rimbach/Odenwald 1 (DE)**
Erfinder: **Kainmüller, Thomas, Dr.**
**Am Kümmelberg 1**
**D-6145 Lindenfels/Odenwald (DE)**
Erfinder: **Hoffmann, Kurt, Dr.**
**Heidenbergstrasse 15**
**D-6147 Lautertal 2 (DE)**
Erfinder: **Kramer, Andreas, Dr.**
**Bundtels**
**CH-3186 Düdingen (CH)**
Erfinder: **Stockinger, Friedrich**
**Au Fernotz**
**CH-1784 Courtepin (CH)**

(74) Vertreter: **Rauh, Peter A., Dr. et al**
**Vossius & Partner,**
**Postfach 86 07 67**
**D-81634 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 404 724 B1

**Beschreibung**

Die vorliegende Erfindung betrifft neue Polyarylenether auf der Basis von 2,2'-Dihydroxybiphenyl, Verfahren zu deren Herstellung und die aus den neuen Polyarylenethern hergestellten Formstoffe, Beschichtungen, Folien oder Faserverbunde.

Polyarylenethersulfone und -ketone sind bekannt und zum Teil im Handel erhältlich, beispielsweise unter der Bezeichnung Victrex® PEEK und Victrex® PES von der Firma ICI oder Ultrason® E und Ultrason® S von der Firma BASF. Sie sind technische Werkstoffe mit sehr guten mechanischen Eigenschaften und einer hohen Beständigkeit gegenüber organischen Lösungsmitteln. Ebenfalls sind derartige Polyarylenether aus 4,4'-Dihydroxybiphenyl. Polyarylenetherketone auf der Basis von 4,4'-Dihydroxybiphenyl sind aber in organischen Lösungsmitteln nicht löslich, wie der EP-A-184 458 entnommen werden kann. Polyarylenethersulfone auf der Basis von 4,4'-Dihydroxybiphenyl sind nur in stark polaren Lösungsmitteln, wie zum Beispiel N-Methylpyrrolidon, nicht aber in chlorierten Kohlenwasserstoffen, beispielsweise Methylenchlorid, löslich, wie von R.N. Johnson et al. im Journal of Polymer Science, Part A-1, 1967, Vol. 5, 2375-2398, beschrieben wird. Für manche Anwendungen sind solche Löslichkeitseigenschaften nicht erwünscht. Filme werden beispielsweise vorteilhaft aus der Lösung heraus hergestellt, oder zur Modifizierung von duromeren Matrixharzen sollen möglichst konzentrierte Polymer-Lösungen in üblichen organischen Lösungsmitteln zur Verwendung kommen.

Im US-A-3,875,103 wird erwähnt, dass Polyethersulfone in chlorierten Kohlenwasserstoffen instabile Lösungen bilden. Um diesen Nachteil zu umgehen, wird zur Herstellung von Polyethersulfonlösungen ein spezielles Lösungsmittelgemisch aus Cyclohexanon, Dimethylsulfoxid und Methylethylketon eingesetzt.

Ferner wird in der JP-A-62-148523 ein neues Herstellungsverfahren für aromatische Polyetherketone offenbart. In der Aufzählung von verwendbaren Dihydroxybiphenylen wird auch 2,2'-Dihydroxybiphenyl genannt, doch liegt kein spezifisches Beispiel für ein daraus hergestelltes Polyetherketon vor. In allen Ausführungsbeispielen dieser Anmeldung werden die Filme durch Pressformung bei 450 °C hergestellt.

Es wurde nun gefunden, dass Polyarylenethersulfone und Copolymere aus Polyarylenethersulfonen und Polyarylenetherketonen auf der Basis von 2,2'-Dihydroxybiphenyl überraschenderweise eine sehr gute Löslichkeit in chlorierten Kohlenwasserstoffen, wie Methylenchlorid, aufweisen und in diesen Lösungsmitteln stabile Lösungen bilden.

Erfindungsgegenstand sind somit neue Polyarylenether mit einer reduzierten Viskosität von 0,1 bis 2,0 dl/g, gemessen bei 25 °C an einer 1 gew.-%igen Lösung in N-Methylpyrrolidon, die, bezogen auf die Gesamtmenge der im Polyetherharz vorhandenen Strukturelemente, 2-100 Mol-% eines wiederkehrenden Strukturelements der Formel I

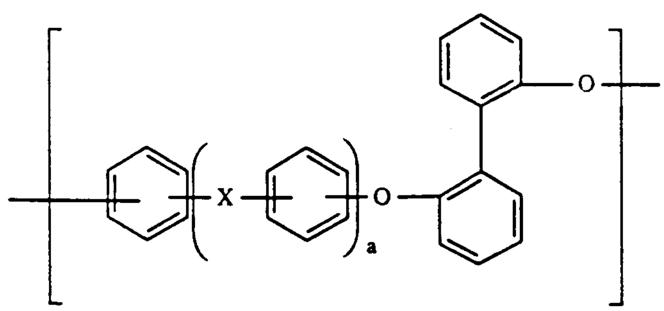 (I)

und 0-98 Mol-% eines wiederkehrenden Strukturelements der Formel II

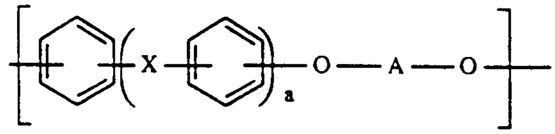 (II)

enthalten, worin jedes a die Zahl 1 oder 2 bedeutet, 50 bis 100 % X, bezogen auf die gesamte Anzahl der in den Strukturelementen der Formeln I und II vorhandenen Bindungen X, für $-SO_2-$ und 0 bis 50 % X für -CO- stehen, und A eine Gruppe der Formeln IIIa-IIIg darstellt

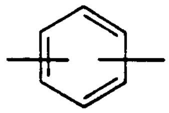 (IIIa), 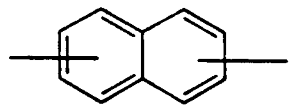 (IIIb),

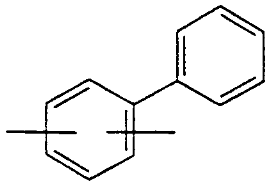 (IIIc), 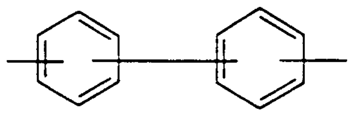 (IIId),

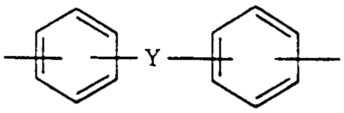 (IIIe), 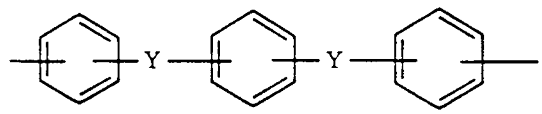 (IIIf) oder

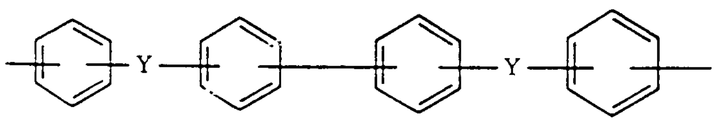 (IIIg),

worin Y für $-CH_2-$, $-C(CH_3)_2-$, $-C(CF_3)_2-$, -S-, -SO-, $-SO_2-$ oder -O- steht und die aromatischen Ringe in den Strukturelementen der Formlen I und II unsubstituiert oder einfach oder mehrfach alkylsubstituiert sind, wobei der Alkylrest 1-4 C-Atome enthält.

Bevorzugt sind solche erfindungsgemässen Polyarylenether, die eine reduzierte Viskosität von 0,15 bis 1,8 dl/g, insbesondere von 0,2 bis 1,2 dl/g, aufweisen.

Es ist allgemein bekannt, dass die reduzierte Viskosität ein Mass für das Molekulargewicht von Polymeren darstellt. Die angegebenen Werte der reduzierten Viskosität von 0,1 bis 2,0 dl/g entsprechen einem durchschnittlichen Molekulargewichtsbereich von 1000 bis 100000.

Vorzugsweise enthalten die erfindungsgemässen Polyarylenether 5-100 Mol-%, insbesondere 10-100 Mol-%, eines wiederkehrenden Strukturelementes der Formel I und 95-0 Mol-%, insbesondere 90-0 Mol-%, eines wiederkehrenden Strukturelementes der Formel II. Und vorzugsweise sind die aromatischen Ringe in den Strukturelementen der Formeln I und II unsubstituiert oder einfach alkylsubstituiert, insbesondere unsubstituiert.

In den erfindungsgemässen Polyarylenethern bedeutet der Rest A im Strukturelement der Formel II vorzugsweise eine Gruppe der Formel IIIb, IIId oder IIIe, insbesondere steht A für einen der folgenden Reste

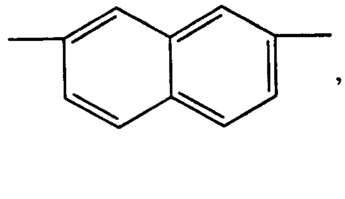, 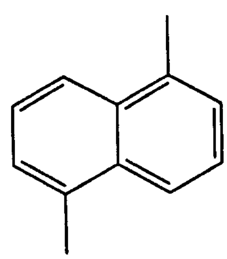,

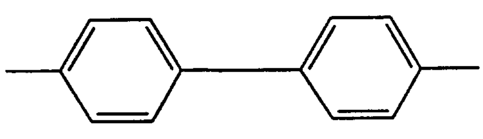 oder 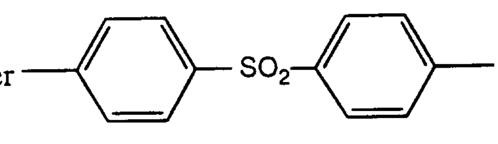

und ganz bevorzugt für den Rest

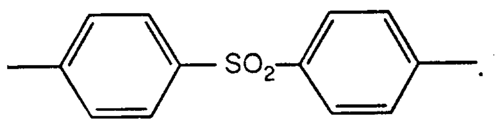

Vorzugsweise bedeutet Y in diesen Formeln -O-, $C(CH_3)_2$-, -S- oder -$SO_2$-.

Ganz besonders bevorzugt sind solche erfindungsgemässen Polyarylenetherharze, worin in den Strukturelementen der Formeln I und II X für -$SO_2$- steht und A den Rest der Formel IIIe bedeutet, worin Y für -$SO_2$- steht. Solche Polyarylenether zeichnen sich durch eine hohe Glasübergangstemperatur aus.

Die erfindungsgemässen Polyarylenether können zum Beispiel hergestellt werden, indem man eine Verbindung der Formel IV oder ein Gemisch verschiedener Verbindungen der Formel IV

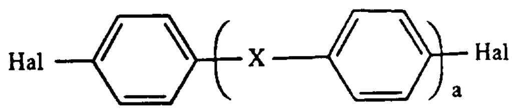 (IV),

worin X und a die oben angegebene Bedeutung haben und Hal für ein Halogen, insbesondere Fluor oder Chlor, steht, in äquimolaren Mengen mit 2,2'-Dihydroxybiphenyl oder mit einem Gemisch aus 2,2'-Dihydroxybiphenyl und einem darin bis zu 98 Mol-% enthaltenen Phenol der Formel

HO - A - OH (V),

worin A die oben angegebene Bedeutung hat, in Gegenwart von Alkali in einem polaren aprotischen Lösungsmittel polykondensiert, bis der erhaltene Polyarylenether eine reduzierte Viskosität von 0,1 bis 2,0, gemessen an einer 1 gew.%-igen Lösung bei 25 °C in N-Methylpyrrolidon, aufweist.

Die bevorzugten erfindungsgemässen Polyarylenether werden hergestellt, indem man eine oder mehrere Dihalogenverbindungen der Formel IV mit 2,2'-Dihydroxybiphenyl oder mit einem Gemisch aus 2,2'-Dihydroxybiphenyl und einem darin bis zu 95 Mol-%, insbesondere bis zu 90 Mol-%, enthaltenen Phenol der Formel V in äquimolaren Mengen polykondensiert, bis der erhaltene Polyarylenether vorzugsweise eine reduzierte Viskosität von 0,15 bis 1,8 dl/g, insbesondere von 0,2 bis 1,2 dl/g, aufweist.

Anstelle des 2,2'-Dihydroxybiphenyls oder des Diphenols der Formel V können in an sich bekannter Weise auch die entsprechenden Alkali- oder Erdalkali-Phenolate, z.B. die Kalium- oder Calciumphenolate, eingesetzt werden.

Unter äquimolaren Mengen versteht man im Zusammenhang mit dem oben angegebenen Verfahren ein Molverhältnis von 0,8 bis 1,2, vorzugsweise von 0,9 bis 1,1 und insbesondere von 0,95 bis 1,05.

Als Alkali verwendet man in diesem Verfahren in der Regel Alkali- und Erdalkalicarbonate, wie Natrium-, Kalium- oder Calciumcarbonat; doch können auch andere alkalische Reagentien, wie Natriumhydroxid, Kaliumhydroxid oder Calciumhydroxid Verwendung finden.

Polare, aprotische Lösungsmittel, die beim Verfahren zur Herstellung der erfindungsgemässen Polyetherharze eingesetzt werden können, sind beispielsweise Dimethylsulfoxid, Dimethylacetamid, Diethylacetamid, Tetramethylharnstoff, N-Methylcaprolactam, N-Methylpyrrolidon und bevorzugt Diphenylsulfon.

Die Reaktion wird zweckmässig bei erhöhter Temperatur durchgeführt, vorzugsweise bis zur Rückfluss-Temperatur des Lösungsmittels, also etwa bis 350 °C.

Häufig empfiehlt sich die Mitverwendung eines Schleppmittels, wie z.B. Chlorbenzol, Xylol oder Toluol, um das bei der Umsetzung gebildete Wasser azeotrop aus dem Reaktionsgemisch entfernen zu können.

Die Verbindungen der Formel IV sind bekannt und zum Teil im Handel erhältlich. Geeignete Verbindungen der Formel IV sind beispielsweise 4,4'-Difluorbenzophenon, 1,3-Di-(4-fluorbenzoyl)-benzol, 1,3- oder 1,4-Di-(4-fluorphenylsulfonyl)-benzol, 4,4'-Dichlorbenzophenon, 4,4'-Difluordiphenylsulfon oder 4,4'-Dichlordiphenylsulfon. Bevorzugte Verbindungen der Formel IV sind 4,4'-Difluorbenzophenon, 4,4'-Difluordiphenylsulfon und besonders 4,4'-Dichlordiphenylsulfon.

Die Verbindungen der Formel V stellen ebenfalls bekannte Verbindungen dar und sind grösstenteils im Handel erhältlich. Beispiele für geeignete zweiwertige Phenole der Formel VI sind Hydrochinon, Resorcin, 4,4'-Dihydroxydiphenyl, 2,5-Dihydroxydiphenyl, 4,4'-Dihydroxydiphenylether, 4,4'-Dihydroxydiphenylsulfon,

4,4'-Dihydroxy-3,3',5,5'-tetramethyldiphenylsulfon, 4,4'-Dihydroxybenzophenon, 4,4'-Dihydroxydiphenylmethan, 4,4'-Dihydroxydiphenylthioether, 2,2-Di-(4-hydroxyphenyl)-propan oder Dihydroxynaphthalin. Bevorzugte Verbindungen der Formel V sind 4,4'-Dihydroxybiphenyl, 4,4'-Dihydroxydiphenylsulfon, 1,5-Dihydroxynaphthalin und 2,7-Dihydroxynaphthalin.

Die erfindungsgemässen Polyarylenether können in der für Thermoplaste üblichen Weise eingesetzt und z.B. zu Formkörpern oder Folien verarbeitet werden, oder als Matrixharze, Klebstoffe oder Überzugsmittel eingesetzt werden. Vor der Verarbeitung der beispielsweise als Presspulver, Schmelze oder Lösung vorliegenden Polyarylenether können übliche Zusatzstoffe, wie beispielsweise Füllstoffe, Pigmente, Stabilisatoren oder Verstärkungsmittel, wie Kohlenstoff-, Bor- oder Glasfasern, zugegeben werden. Die erfindungsgemässen Polyarylenether können auch zusammen mit anderen Thermoplasten verarbeitet werden. Ausserdem eignen sie sich als Modifizierungsmittel für heisshärtbare Harze, wie Epoxidharze oder Bismaleinimide. Aufgrund ihrer Löslichkeit in organischen Lösungsmitteln eignen sich die erfindungsgemässen Polyarylenether vorzugsweise zur Herstellung von Filmen aus einer Lösung oder zum Einbringen in andere Systeme, wie beispielsweise zum Modifizieren von anderen Kunststoffen, sowohl von Thermoplasten als auch von Duromeren, oder als Matrixharze für die Herstellung von Faserverbundsystemen, wobei man als Verstärkungsfasern die üblichen bei der Verstärkung technischer Werkstoffe verwendeten Fasern einsetzen kann. Diese können organische oder anorganische Fasern, Naturfasern oder Synthesefasern, wie Aramid-Fasern, sein und als Faserbündel, als orientierte oder nicht-orientierte Fasern oder als Endlosfasern vorliegen. Beispielsweise verwendet man als Verstärkungsfasern Glas-, Asbest-, Bor-, Kohlenstoff- und Metallfasern.

Gegenstand vorliegender Erfindung sind somit auch die unter Verwendung der erfindungsgemässen Polyarylenether hergestellten Formstoffe, Beschichtungen oder Folien sowie Faserverbundsysteme, enthaltend neben üblichen Verstärkungsfasern die erfindungsgemässen Polyarylenether als Matrixharz.

Die erfindungsgemässen Polyarylenether zeichnen sich durch eine unerwartet hohe Löslichkeit in Methylenchlorid und durch eine sehr gute Stabilität dieser Lösungen aus.

Beispiel 1: In einem Rundkolben mit Rührer und Schutzgasanschluss wird unter Stickstoff eine Mischung aus 9,29 g (0,05 Mol) 2,2'-Dihydroxybiphenyl, 33,34 g Diphenylsulfon, 7,85 g (0,0568 Mol) Kaliumcarbonat und 55,00 g Xylol bei einer Badtemperatur von 200 °C erhitzt und ein Xylol/Wasser-Gemisch abdestilliert. Gegen Ende des Destillationsvorganges wird dabei kurzzeitig Vakuum (2 mbar) angelegt. Sodann werden 12,80 g (0,05 Mol) 4,4'-Difluordiphenylsulfon zu der Reaktionsmischung gegeben, die Temperatur auf 250 °C erhöht und dort 1 Stunde belassen. Danach wird die Temperatur auf 320 °C erhöht und diese Temperatur 3 Stunden beibehalten, wobei die Reaktionsmischung in zunehmendem Masse viskos wird.

Nach Abkühlen wird das Reaktionsgemisch dem Kolben entnommen, pulverisiert, mit 2-n Salzsäure versetzt und zunächst mit Wasser, dann mit Aceton extrahiert. Das so gereinigte Polymere wird danach im Vakuumtrockenschrank bis zu einer Temperatur von 240 °C getrocknet. Ein auf diese Weise hergestelltes Polyarylenethersulfon mit 2,2'-Biphenyl-Einheiten besitzt eine reduzierte Viskosität (1 Gew.-% Polymeres in N-Methylpyrrolidon (NMP) bei 25 °C) von 0,63 dl/g. Es ist zu mehr als 25 % in Methylenchlorid löslich. Eine derartige Lösung ist über mehrere Wochen stabil, das heisst, es erfolgt weder eine Trübung, ein Niederschlag oder die Ausfällung des Polymeren. Die Glasübergangstemperatur ($T_G$) wird in der folgenden Tabelle angegeben.

Beispiele 2 bis 6: Die in der Tabelle angegebenen Beispiele 2-6 werden in analoger Weise durchgeführt wie in Beispiel 1 angegeben wird, mit der Ausnahme, dass in den Beispielen 4 bis 6 anstelle von Salzsäure nun Essigsäure verwendet wurde und in Beispiel 6 das Reaktionsgemisch nicht extrahiert, sondern in N-Methylpyrrolidon gelöst wird. Nach Filtration der Lösung erhält man das Polymere durch Ausfällung in Isopropanol.

Beispiele 7 bis 18: Die in der Tabelle angegebenen Beispiele 7-18 werden in analoger Weise durchgeführt wie in Beispiel 1 angegeben wird, mit der Ausnahme, dass anstelle von Salzsäure nun Essigsäure verwendet wird und das Reaktionsgemisch nicht extrahiert, sondern in Methylenchlorid gelöst wird. Nach Filtration der Lösung erhält man das Polymer durch Ausfällung in Isopropanol.

Tabelle: Polyarylenether mit 2,2'-Biphenyleinheiten

| Beispiel | Zusammensetzung | Reaktionsbedingungen | red. Viskosität [dl/g] *) | Löslichkeit in Methylenchlorid | $T_G$ (DSC) [°C] |
|---|---|---|---|---|---|
| 1 | Polyethersulfon | | 0.63 | > 25 % | 177 |
| | 2,2'-Dihydroxybiphenyl | | | | |
| | (0.05 Mol) | 1 h/250°C, | | | |
| | 4,4'-Difluordiphenylsulfon (0.05 Mol) | 3 h/320°C. | | | |
| | Kaliumcarbonat (0.0568 Mol) | | | | |
| 2 | Polyethersulfon-Copolymer | | 0.23 | > 25 % | 201 |
| | 2,2'-Dihydroxybiphenyl | | | | |
| | (0.0504 Mol) | 1 h/250°C, | | | |
| | 4,4'-Dihydroxydiphenylsulfon (0.0505 Mol) | 1 h/320°C, | | | |
| | 4,4'-Dichlordiphenylsulfon (0.1003 Mol) | 2 h/350°C. | | | |
| | Kaliumcarbonat (0.1162 Mol) | | | | |
| 3 | Polyethersulfon-Polyetherketon-Copolymer | | 0.21 | > 25 % | 143 |
| | 2,2'-Dihydroxybiphenyl | | | | |
| | (0.10 Mol) | 1 h/250°C, | | | |
| | 4,4'-Difluorbenzophenon | | | | |
| | (0.05 Mol) | 1 h/320°C, | | | |
| | 4,4'-Difluordiphenylsulfon (0.05 Mol) | 4 h/350°C. | | | |
| | Kaliumcarbonat (0.055 Mol) | | | | |
| | Calciumcarbonat (0.055 Mol)**) | | | | |

| Beispiel | Zusammensetzung | Reaktionsbedingungen | red. Viskosität [dl/g] *) | Löslichkeit in Methylenchlorid | $T_G$ (DSC) [°C] |
|---|---|---|---|---|---|
| 4 | <u>Polyethersulfon-Copolymer</u><br>2,2'-Dihydroxybiphenyl (0.25 Mol)<br>4,4'-Dihydroxydiphenylsulfon (0.075 Mol)<br>4,4'-Dichlordiphenylsulfon (0.1002 Mol)<br>Kaliumcarbonat (0.1128 Mol) | 1 h/250°C,<br>3 h/320°C. | 0.67 | > 25 % | 221 |
| 5 | <u>Polyethersulfon-Copolymer</u><br>2,2'-Dihydroxybiphenyl (0.0503 Mol)<br>2,5-Dihydroxydiphenyl (0.0501 Mol)<br>4,4'-Dichlordiphenylsulfon (0.1003 Mol)<br>Kaliumcarbonat (0.1104 Mol) | 1 h/250°C,<br>3 h/320°C. | 0.92 | > 25 % | 189 |
| 6 | <u>Polyethersulfon-Polyetherketon-Copolymer</u><br>2,2'-Dihydroxybiphenyl (0.1003 Mol)<br>4,4'-Difluorbenzophenon (0.0503 Mol)<br>4,4'-Difluordiphenylsulfon (0.0500 Mol)<br>Kaliumcarbonat (0.1103 Mol) | 1 h/250°C,<br>3 h/320°C,<br>4 h/350°C. | 1.12 | > 25 % | 168 |

| Beispiel | Zusammensetzung | Reaktionsbedingungen | red. Viskosität [dl/g] *) | Löslichkeit in Methylenchlorid | $T_G$ (DSC) [°C] |
|---|---|---|---|---|---|
| 7 | Polyethersulfon<br>2,2'-Dihydroxybiphenyl (0.4043 Mol)<br>4,4'-Dichlordiphenylsulfon (0.4001 Mol)<br>Kaliumcarbonat (0.4223 Mol) | 1 h/250°C,<br>1 h/275°C,<br>4 h/300°C. | 0.27 | > 25 % | 197 |
| 8 | Polyethersulfon-Copolymer<br>2,2'-Dihydroxybiphenyl (0.2008 Mol)<br>4,4'-Dihydroxybiphenyl (0.2008 Mol)<br>4,4'-Dichlordiphenylsulfon (0.4001 Mol)<br>Kaliumcarbonat (0.4206 Mol) | 0,5 h/225°C,<br>0,5 h/250°C,<br>1 h/275°C,<br>1 h/300°C,<br>3 h/320°C. | 0.39 | > 25 % | 195 |
| 9 | Polyethersulfon-Copolymer<br>2,2'-Dihydroxybiphenyl (0.0402 Mol)<br>4,4'-Dihydroxydiphenylsulfon (0.3608 Mol)<br>4,4'-Dichlordiphenylsulfon (0.4000 Mol)<br>Kaliumcarbonat (0.4200 Mol) | 1 h/250°C,<br>4 h/280°C. | 0.56 | > 25 % | 223 |

| Beispiel | Zusammensetzung | Reaktionsbedingungen | red. Viskosität [dl/g] *) | Löslichkeit in Methylenchlorid | $T_G$ (DSC) [°C] |
|---|---|---|---|---|---|
| 10 | Polyethersulfon-Copolymer<br>2,2'-Dihydroxybiphenyl (0.10025 Mol)<br>4,4'-Dihydroxydiphenylsulfon (0.10025 Mol)<br>4,4'-Dihydroxybiphenyl (0.2005 Mol)<br>4,4'-Dichlordiphenylsulfon (0.4000 Mol)<br>Kaliumcarbonat (0.4200 Mol) | 1 h/250°C,<br>4 h/280°C. | 0.53 | > 25 % | 208 |
| 11 | Polyethersulfon-Copolymer<br>2,2'-Dihydroxybiphenyl (0.10025 Mol)<br>4,4'-Dihydroxydiphenylsulfon (0.2005 Mol)<br>4,4'-Dihydroxybiphenyl (0,10025 Mol)<br>4,4'-Dichlordiphenylsulfon (0.4000 Mol)<br>Kaliumcarbonat (0.4200 Mol) | 1 h/250°C,<br>4 h/280°C. | 0.82 | > 25 % | 214 |
| 12 | Polyethersulfon-Copolymer<br>2,2'-Dihydroxybiphenyl (0.10025 Mol)<br>1,5-Dihydroxynaphthalin (0.10025 Mol)<br>4,4'-Dihydroxybiphenyl (0,2005 Mol)<br>4,4'-Dichlordiphenylsulfon (0.4000 Mol)<br>Kaliumcarbonat (0.4200 Mol) | 1 h/250°C,<br>4 h/280°C. | 0.52 | > 25 % | 212 |

| Beispiel | Zusammensetzung | Reaktionsbedingungen | red. Viskosität [dl/g] *) | Löslichkeit in Methylenchlorid | $T_G$ (DSC) [°C] |
|---|---|---|---|---|---|
| 13 | Polyethersulfon-Copolymer<br>2,2'-Dihydroxybiphenyl (0.10025 Mol)<br>2,7-Dihydroxynaphthalin (0.2005 Mol)<br>4,4'-Dihydroxybiphenyl (0,1025 Mol)<br>4,4'-Dichlordiphenylsulfon (0.4000 Mol)<br>Kaliumcarbonat (0.4200 Mol) | 1 h/250°C,<br>4 h/280°C. | 0.52 | > 25 % | 204 |
| 14 | Polyethersulfon-Copolymer<br>2,2'-Dihydroxybiphenyl (0.10025 Mol)<br>2,7-Dihydroxynaphthalin (0.2005 Mol)<br>4,4'-Dihydroxybiphenyl (0,1025 Mol)<br>4,4'-Dichlordiphenylsulfon (0.4000 Mol)<br>Kaliumcarbonat (0.4200 Mol) | 1 h/250°C,<br>4 h/280°C. | 0.43 | > 25 % | 209 |
| 15 | Polyethersulfon-Polyetherketon-Copolymer<br>2,2'-Dihydroxybiphenyl (0.0502 Mol)<br>4,4'-Dihydroxydiphenylsulfon (0.0504 Mol)<br>4,4'-Dichlordiphenylsulfon (0,0503 Mol)<br>4,4'-Difluorbenzophenon (0.0502 Mol)<br>Kaliumcarbonat (0.4200 Mol) | 1 h/250°C,<br>4 h/320°C. | 0.34 | > 25 % | 188 |

| Beispiel | Zusammensetzung | Reaktionsbedingungen | red. Viskosität [dl/g] *) | Löslichkeit in Methylenchlorid | $T_G$ (DSC) [°C] |
|---|---|---|---|---|---|
| 16 | Polyethersulfon-Polyetherketon-Copolymer<br>2,2'-Dihydroxybiphenyl (0.0502 Mol)<br>4,4'-Dihydroxydiphenylsulfon (0.0504 Mol)<br>4,4'-Dichlordiphenylsulfon (0.0503 Mol)<br>4,4'-Difluorbenzophenon (0.0502 Mol)<br>Kaliumcarbonat (0.4200 Mol) | 1 h/250°C,<br>4 h/320°C. | 0.73 | > 25 % | 200 |
| 17 | Polyethersulfon-Copolymer<br>2,2'-Dihydroxybiphenyl (0.0402 Mol)<br>Hydrochinon (0.0402 Mol)<br>4,4'-Dihydroxydiphenylsulfon (0.3208 Mol)<br>4,4'-Dichlordiphenylsulfon (0.4000 Mol)<br>Kaliumcarbonat (0.4200 Mol) | 1 h/250°C,<br>1 h/275°C,<br>3 h/280°C. | 0.82 | > 25 % | 224 |

| Beispiel | Zusammensetzung | Reaktionsbedingungen | red. Viskosität [dl/g] *) | Löslichkeit in Methylenchlorid | $T_G$ (DSC) [°C] |
|---|---|---|---|---|---|
| 18 | Polyethersulfon-Copolymer<br>2,2'-Dihydroxybiphenyl (0.0201 Mol)<br>4,4'-Dihydroxydiphenylsulfon (0,3812 Mol)<br>4,4'-Dichlordiphenylsulfon (0.4000 Mol)<br>Kaliumcarbonat (0.4200 Mol) | 1 h/250°C,<br>1 h/275°C,<br>3 h 45 min/280°C. | 0.85 | > 25 % | 228 |

*) red. Viskosität: 1 Gew.-% Polymeres in NMP bei 25°C

**) Kalium/Calciumcarbonat-Mischungen als Kondensationshilfsmittel bei der Herstellung aromatischer Polyether sind in DE 3342433 beschrieben.

Beispiel 19: 6,52 g (0,035 Mol) 2,2'-Dihydroxybiphenyl, 78,84 g (0,315 Mol) 4,4'-Dihydroxydiphenylsulfon, 99,50 g (0,347 Mol) 4,4'-Dichlordiphenylsulfon, 51,28 g (0,371 Mol) $K_2CO_3$ und 185 g Diphenylsulfon werden in einem 1 Liter Metallreaktor unter $N_2$-Spülung auf 180 °C erhitzt. Nach Erreichen von 180 °C Innentemperatur wird das Rohstoffgemisch 2 h gerührt. Das bei der Reaktion gebildete Kondensationswasser destilliert über einen absteigenden Kühler fortlaufend aus dem Reaktionsgemisch ab. Nach 2 h bei 180 °C wird die Reaktionstemperatur innerhalb von weiteren 2 h auf 270 °C erhöht. Nach Erreichen von 270 °C wird die Temperatur 2 h konstant beibehalten. Das Reaktionsgemisch wird danach über ein Bodenventil dem Reaktionskessel entnommen und nach Abkühlen grob gemahlen.

Das gemahlene Reaktionsgemisch wird durch Extraktion (3 mal mit einem Aceton/Wasser-Gemisch (80:20) und 1 mal mit Wasser) aufgearbeitet. Zum Freisetzen der OH-Endgruppen wird bei der Wasserextraktion Essigsäure zugesetzt. Das Polyethersulfon-Copolymere wird anschliessend bei 110 °C im Vakuum getrocknet. Es weist eine reduzierte Viskosität von 0,57 dl/g, einen $T_G$ (DSC) von 228 °C und einen OH-Endgruppengehalt von 72 µVal/g auf.

Beispiel 20: Die nach den Beispielen 4, 8 und 10 hergestellten Polymeren werden zu 20 Gewichtsteilen als Lösung in Methylenchlorid zu einer Mischung, bestehend aus 50 Teilen N,N,N',N'-Tetraglycidyldiaminodiphenylmethan und 50 Teilen N,N,O-Triglycidyl-p-aminophenol gegeben und das Lösungsmittel im Vakuum entfernt. Nach Zugabe von 50 Teilen p-Diaminodiphenylsulfon wird die Mischung in einer Form 2 Stunden bei 160 °C sowie 2 Stunden bei 210 °C ausgehärtet. Aus einer so hergestellten Platte werden Prüfkörper geschnitten und die Bruchzähigkeit gemäss ASTM E 399 bestimmt. Es ergeben sich sehr gute Bruchzähigkeitswerte.

Tabelle

| Bruchzähigkeiten von mit Thermoplasten modifizierten Epoxidharzen | |
|---|---|
| Zusatz-Thermoplast nach Beispiel | Bruchzähigkeit (J/m$^2$) |
| 4 | 248 |
| 8 | 227 |
| 10 | 250 |

Beispiel 21: Analog Beispiel 19 wird ein Polyethersulfon aus 0,053 Mol 2,2'-Dihydroxybiphenyl, 0,298 Mol 4,4'-Dihydroxydiphenylsulfon und 0,347 Mol 4,4'-Dichlordiphenylsulfon mit 0,371 Mol Kaliumcarbonat in einer Reaktionszeit von 1,5 h bei 270 °C synthetisiert. Das Polymer weist eine red. Viskosität (1 Gew.% Polymer in NMP bei 25 °C) von 0,54 dl/g, eine Glasübergangstemperatur (DSC) von 221 °C und einen OH-Endgruppengehalt von 76 μ Val/g auf.

Beispiel 22: Analog Beispiel 20 werden aus dem Epoxidharzgemisch und dem nach Beispiel 21 synthetisierten Polyethersulfon als Zusatz-Thermoplast mit den in der Tabelle angegebenen Mengen Prüfkörper hergestellt und die Biegefestigkeit gemäss ISO 178, Randfaserdehnung gemäss ISO 178 und die Bruchzähigkeit $C_{Ic}$ gemäss ASTM E 399 bestimmt. Die erhaltenen Werte sind in folgender Tabelle angegeben.

| | Beispiel 22 | | |
|---|---|---|---|
| Zusatz-Thermoplast (Teile) | Biegefestigkeit [N/mm]$^2$ | Randfaserdehnung [%] | Bruchzähigkeit $G_{Ic}$ [J/m$^2$] |
| 20 | 161 | 5,6 | 242 |
| 30 | 170 | 6,4 | 298 |
| 40 | 176 | 7,1 | 400 |

**Patentansprüche**

**Patentansprüche für folgende Vertragsstaaten : DE, FR, GB, IT, NL, SE**

**1.** Polyarylenether mit einer reduzierten Viskosität von 0,1 bis 2,0 dl/g, gemessen bei 25 °C an einer 1 gew.-%igen Lösung in N-Methylpyrrolidon, die, bezogen auf die Gesamtmenge der im Polyetherharz vorhandenen Strukturelemente, 2-100 Mol-% eines wiederkehrenden Strukturelements der Formel I

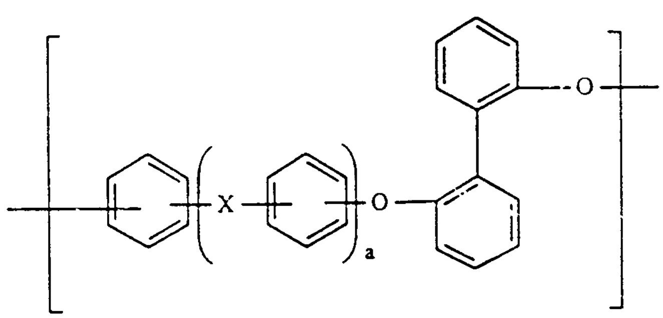

(I)

und 0-98 Mol-% eines wiederkehrenden Strukturelements der Formel II

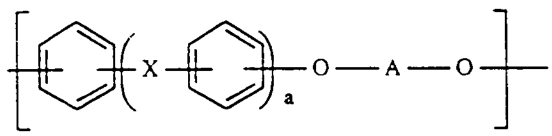 (II)

enthalten, worin jedes a die Zahl 1 oder 2 bedeutet, 50 bis 100 % X, bezogen auf die gesamte Anzahl der in den Strukturelementen der Formeln I und II vorhandenen Bindungen X, für $-SO_2-$ und 0 bis 50 % X für -CO- stehen, und A eine Gruppe der Formeln IIIa-IIIg darstellt

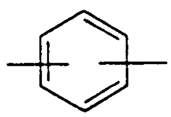 (IIIa), 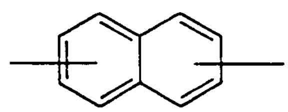 (IIIb),

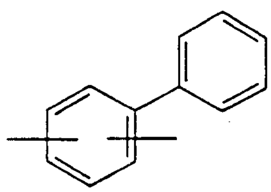 (IIIc), 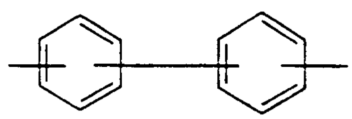 (IIId),

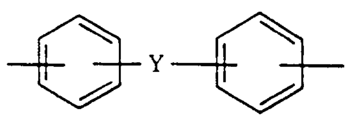 (IIIe), 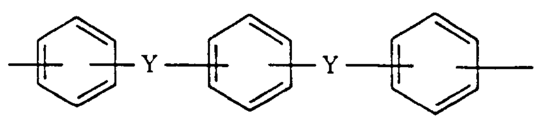 (IIIf) oder

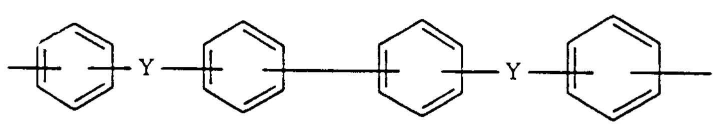 (IIIg),

worin Y für $-CH_2-$, $-C(CH_3)_2-$, $-C(CF_3)_2-$, -S-, -SO-, $-SO_2-$ oder -O- steht und die aromatischen Ringe in den Strukturelementen der Formeln I und II unsubstituiert oder einfach oder mehrfach alkylsubstituiert sind, wobei der Alkylrest 1-4 C-Atome enthält.

**2.** Polyarylenether gemäss Anspruch 1, die 5-100 Mol-% eines wiederkehrenden Strukturelements der Formel I und 95-0 Mol-% eines wiederkehrenden Strukturelements der Formel II enthalten.

**3.** Polyarylenether gemäss Anspruch 1, die 10-100 Mol-% eines wiederkehrenden Strukturelements der Formel I und 90-0 Mol-% eines wiederkehrenden Strukturelements der Formel II enthalten.

**4.** Polyarylenether gemäss Anspruch 1, worin A für eine Gruppe der Formel IIIb, IIId oder IIIe steht.

**5.** Polyarylenether gemäss Anspruch 1, worin A für eine Gruppe der Formel IIIb, IIId oder IIIe steht, wobei Y -O-, $-C(CH_3)_2-$, -S- oder $-SO_2-$ bedeutet.

**6.** Polyarylenether gemäss Anspruch 1, worin A für einen der folgenden Reste

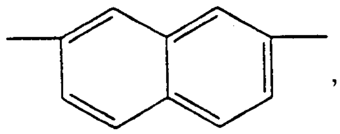, 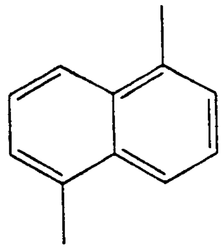, 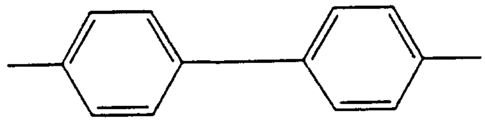 oder

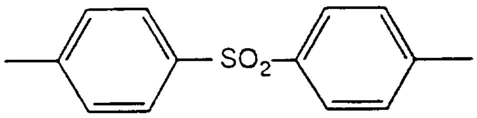 steht.

**7.** Polyarylenether gemäss Anspruch 1, worin X für $-SO_2-$ steht und A den Rest der Formel IIIe bedeutet, worin Y für $-SO_2-$ steht.

**8.** Verfahren zum Herstellen von Polyarylenethern gemäss Anspruch 1, dadurch gekennzeichnet dass man eine Verbindung der Formel IV

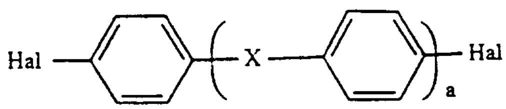 (IV),

worin a und X die gleiche Bedeutung wie in Anspruch 1 haben und Hal für ein Halogen, insbesondere Fluor oder Chlor, steht, in äquimolaren Mengen mit 2,2'-Dihydroxybiphenyl oder mit einem Gemisch aus 2,2'-Dihydroxyphenyl und einem darin bis zu 98 Mol.-% enthaltenen Phenol der Formel V

HO - A - OH (V),

worin A die gleiche Bedeutung wie in Anspruch 1 hat, in Gegenwart von Alkali in einem polaren aprotischen Lösungsmittel polykondensiert, bis der erhaltene Polyarylenether eine reduzierte Viskosität von 0,1 bis 2,0, gemessen an einer 1 gew.%-igen Lösung bei 25 °C in N-Methylpyrrolidon, aufweist.

**9.** Formstoffe, Beschichtungen oder Folien, enthaltend einen Polyarylenether gemäss Anspruch 1.

**10.** Faserverbund, enthaltend Verstärkungsfasern und als Matrixharz einen Polyarylenether gemäss Anspruch 1.

**11.** Verwendung der Polyarylenether gemäss Anspruch 1 zum Modifizieren von Kunststoffen, insbesondere von Epoxidharzen oder Bismaleinimiden.

**Patentansprüche für folgenden Vertragsstaat : ES**

**1.** Verfahren zur Herstellung von Polyarylenether, die bezogen auf die Gesamtmenge der im Polyetherharz vorhandenen Strukturelemente, 2-100 Mol-% eines wiederkehrenden Strukturelements der Formel I

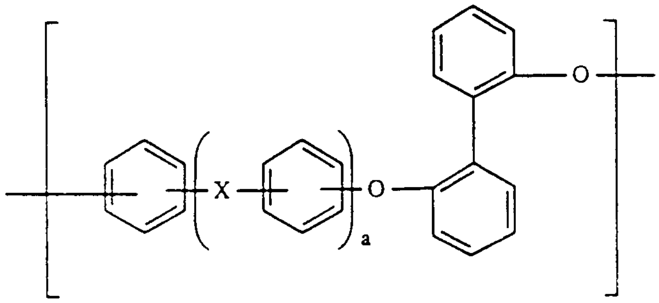

(I)

und 0-98 Mol-% eines wiederkehrenden Strukturelements der Formel II

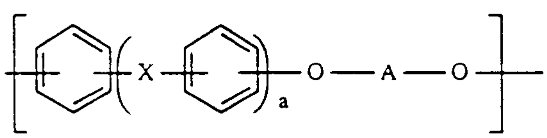

(II)

enthalten, worin jedes a die Zahl 1 oder 2 bedeutet, 50 bis 100 % X, bezogen auf die gesamte Anzahl der in den Strukturelementen der Formeln I und II vorhandenen Bindungen X, für $-SO_2-$ und 0 bis 50 % X für -CO- stehen, und A eine Gruppe der Formeln IIIa-IIIg darstellt

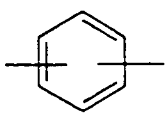

(IIIa),

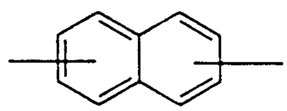

(IIIb),

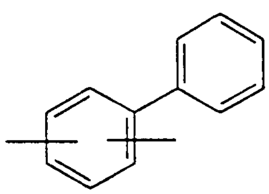

(IIIc),

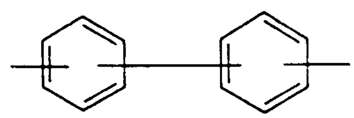

(IIId),

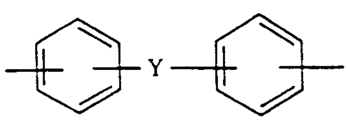

(IIIe),

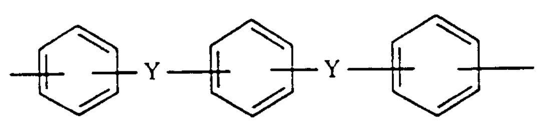

(IIIf) oder

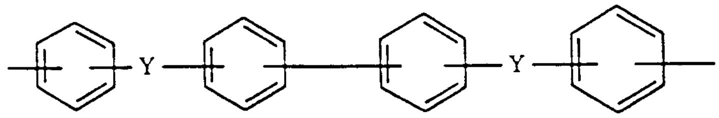

(IIIg),

worin Y für $-CH_2-$, $-C(CH_3)_2-$, $-C(CF_3)_2-$, -S-, -SO-, $-SO_2-$ oder -O- steht und die aromatischen Ringe in den Strukturelementen der Formeln I und II unsubstituiert oder einfach oder mehrfach alkylsubstituiert sind, wobei der Alkylrest 1-4 C-Atome enthält, dadurch gekennzeichnet, dass man eine Verbindung der Formel IV

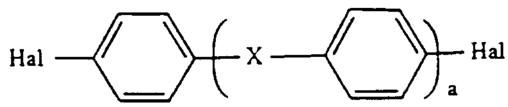 (IV),

worin a und X die gleiche Bedeutung wie in Formel I haben und Hal für ein Halogen, insbesondere Fluor oder Chlor, steht, in äquimolaren Mengen mit 2,2'-Dihydroxybiphenyl oder mit einem Gemisch aus 2,2'-Dihydroxyphenyl und einem darin bis zu 98 Mol.-% enthaltenen Phenol der Formel V

HO - A - OH (V),

worin A die gleiche Bedeutung wie in Anspruch 1 hat, in Gegenwart von Alkali in einem polaren aprotischen Lösungsmittel polykondensiert, bis der erhaltene Polyarylenether eine reduzierte Viskosität von 0,1 bis 2,0, gemessen an einer 1 gew.%-igen Lösung bei 25 °C in N-Methylpyrrolidon, aufweist.

**2.** Verfahren gemäss Anspruch 1, dadurch gekennzeichnet, dass man eine Verbindung der Formel IV mit einem Gemisch aus 2,2'-Dihydroxybiphenyl und einem darin bis zu 95 Mol-% enthaltenen Phenol der Formel V in äquimolaren Mengen polykondensiert, bis der erhaltene Polyarylenether eine reduzierte Viskosität von 0,15 bis 1,8 dl/g aufweist.

**3.** Verfahren gemäss Anspruch 1, dadurch gekennzeichnet, dass man eine Verbindung der Formel IV mit einem Gemisch aus 2,2'-Dihydroxybiphenyl und einem darin bis zu 90 Mol-% enthaltenen Phenol der Formel V in äquimolaren Mengen polykondensiert, bis der erhaltene Polyarylenether eine reduzierte Viskosität von 0,2 bis 1,2 dl/g aufweist.

**4.** Verfahren gemäss Anspruch 1, dadurch gekennzeichnet, dass man anstelle des 2,2'-Dihydroxybiphenyls oder des Diphenols der Formel V die entsprechenden Alkali- oder Erdalkaliphenolate einsetzt.

## Claims

## Claims for the following Contracting States : DE, FR, GB, IT, NL, SE

**1.** Polyaryleneethers having a reduced viscosity of 0.1 to 2.0 dl/g, measured at 25 °C in a 1% solution by weight in N-methylpyrrolidone, which ethers, based on the total amount of the structural units present in the polyether resin, contain 2-100 mol% of a recurring structural unit of formula I

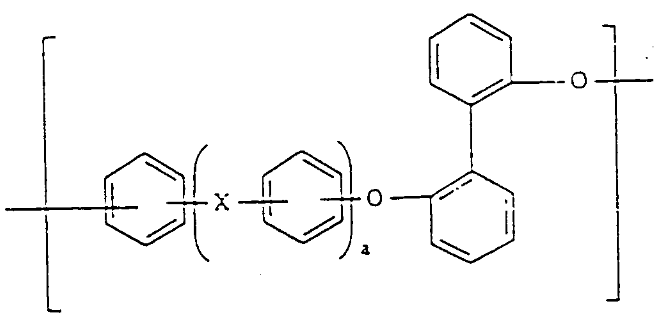 (I)

and 0-98 mol% of a recurring structural unit of formula II

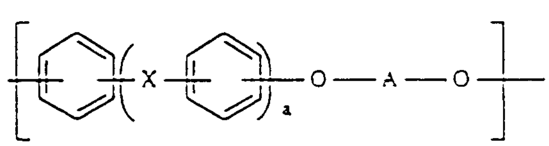 (II)

wherein each a is 1 or 2, 50 to 100% of X, based on the total number of the bonds X present in the

structural units of formulae I and II, are $-SO_2-$, and 0 to 50% of X are -CO-, and A is a group of formulae IIIa-IIIg

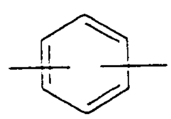 (IIIa), 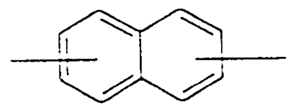 (IIIb),

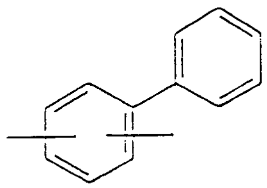 (IIIc), 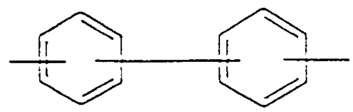 (IIId),

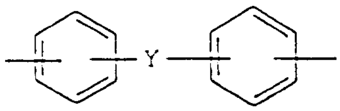 (IIIe), 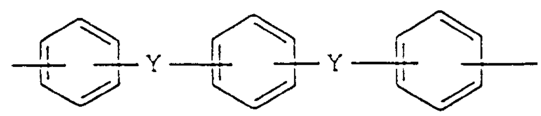 (IIIf) or

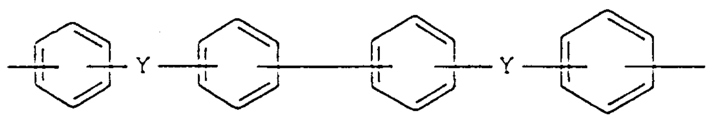 (IIIg),

wherein Y is $-CH_2-$, $C(CH_3)_2-$, $-C(CF_3)_2-$, -S-, -SO-, $-SO_2-$ or -O-, and the aromatic rings in the structural units of formulae I and II are unsubstituted or substituted by one or more alkyl groups of 1 to 4 carbon atoms.

**2.** The polyaryleneethers according to claim 1 which contain 5-100 mol% of a recurring structural unit of formula I and 95-0 mol% of a recurring structural unit of formula II.

**3.** The polyaryleneethers according to claim 1 which contain 10-100 mol% of a recurring structural unit of formula I and 90-0 mol% of a recurring structural unit of formula II.

**4.** The polyaryleneethers according to claim 1 wherein A is a group of formula IIIb, IIId or IIIe.

**5.** The polyaryleneethers according to claim 1, wherein A represents a group of formula IIIb, IIId or IIIe, wherein Y is -O-, $-C(CH_3)_2-$, -S- or $-SO_2-$.

**6.** The polyaryleneethers according to claim 1, wherein A represents one of the following radicals

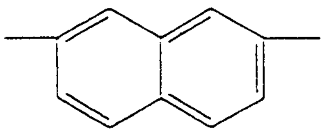,
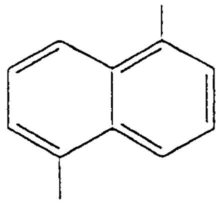,
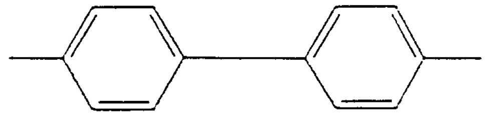 or

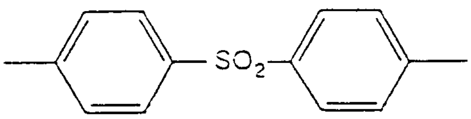.

**7.** The polyaryleneethers according to claim 1, wherein X represents $-SO_2-$ and A is the radical of formula IIIe, wherein Y represents $-SO_2-$.

**8.** Process for the preparation of polyaryleneethers according to claim 1, characterized by polycondensing a compound of formula IV

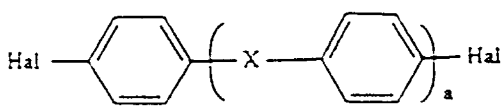
(IV),

wherein a and X have the same meaning as in claim 1 and Hal represents halogen, particularly fluoro or chloro, in equimolar amounts with 2,2'-dihydroxybiphenyl or with a mixture of 2,2'-dihydroxyphenyl and a phenol of the formula V

HO - A - OH (V),

present therein in an amount of up to 98 mol%, wherein A has the same meaning as in claim 1, in the presence of alkali and in a polar aprotic solvent, until the resultant polyaryleneether has a reduced viscosity of 0.1 to 2.0, measured at 25 °C in a 1% solution by weight in N-methylpyrrolidone.

**9.** Moulding compositions, coatings or sheets, containing a polyaryleneether according to claim 1.

**10.** Fiber composite, containing reinforcing fibers and, as a matrix resin, a polyaryleneether according to claim 1.

**11.** Use of the polyaryleneethers according to claim 1 for modifying plastics, particularly epoxy resins or bismaleine imides.

**Claims for the following Contracting State : ES**

**1.** Process for the preparation of polyaryleneethers, which ethers, based on the total amount of the structural units present in the polyether resin, contain 2-100 mol% of a recurring structural unit of formula I

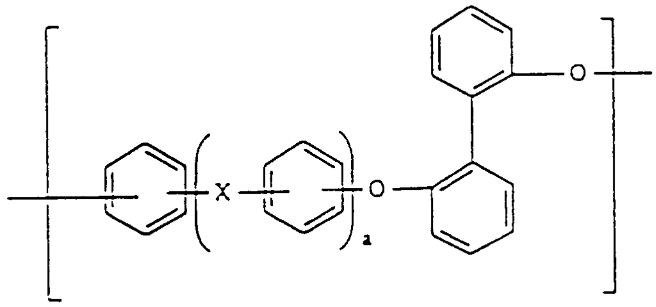 (I)

and 0-98 mol% of a recurring structural unit of formula II

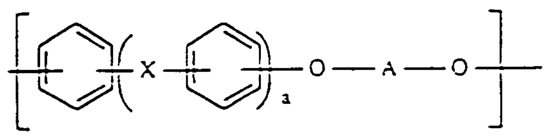 (II)

wherein each a is 1 or 2, 50 to 100% of X, based on the total number of the bonds X present in the structural units of formulae I and II, are $-SO_2-$, and 0 to 50% of X are -CO-, and A is a group of formulae IIIa-IIIg

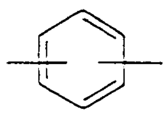 (IIIa), 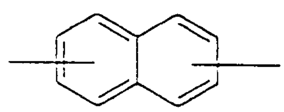 (IIIb),

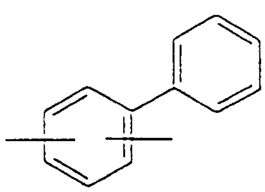 (IIIc), 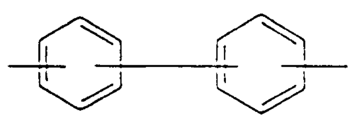 (IIId),

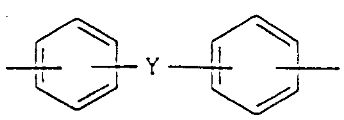 (IIIe), 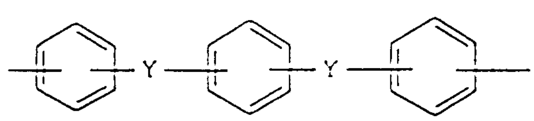 (IIIf) or

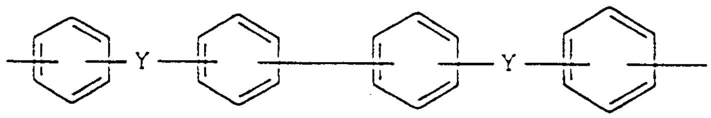 (IIIg),

wherein Y is $-CH_2-$, $C(CH_3)_2-$, $-C(CF_3)_2-$, -S-, -SO-, $-SO_2-$ or -O-, and the aromatic rings in the structural units of formulae I and II are unsubstituted or substituted by one or more alkyl groups of 1 to 4 carbon atoms, characterized by polycondensing a compound of formula IV

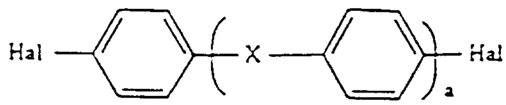

(IV),

wherein a and X have the same meaning as in formula I and Hal represents halogen, particularly fluoro or chloro, in equimolar amounts with 2,2'-dihydroxybiphenyl or with a mixture of 2,2'-dihydroxyphenyl and a phenol of the formula V

HO - A - OH (V),

present therein in an amount of up to 98 mol%, wherein A has the same meaning as in claim 1, in the presence of alkali and in a polar aprotic solvent, until the resultant polyaryleneether has a reduced viscosity of 0.1 to 2.0, measured at 25 °C in a 1% solution by weight in N-methylpyrrolidone.

2. The process according to claim 1, characterized by polycondensing a compound of formula IV with a mixture of 2,2'-dihydroxybiphenyl and a phenol of formula V present therein in an amount of up to 95 mol% in equimolar amounts until the resultant polyaryleneether has a reduced viscosity of 0.15 to 1.8 dl/g.

3. The process according to claim 1, characterized by polycondensing a compound of formula IV with a mixture of 2,2'-dihydroxybiphenyl and a phenol of formula V present therein in an amount of up to 90 mol% in equimolar amounts until the resultant polyaryleneether has a reduced viscosity of 0.2 to 1.2 dl/g.

4. The process according to claim 1, characterized by using instead of the 2,2'-dihydroxybiphenyl or the diphenyl of formula V the corresponding alkali or alkaline earth phenolates.

**Revendications**
**Revendications pour les Etats contractants suivants : DE, FR, GB, IT, NL, SE**

1. Polyarylèneéthers présentant une viscosité réduite de 0,1 à 2,0 dl/g, mesurée à 25 °C sur une solution à 1 % en poids dans de la N-méthylpyrrolidone, qui contiennent, rapportés à la quantité totale des éléments de structure présents dans la résine de polyéther, 2-100 % en mol d'un élément de structure de la formule I se répétant

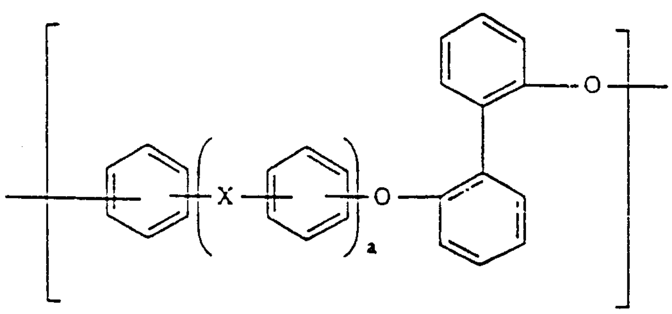

(I)

et 0-98 % en mol d'un élément de structure de la formule II se répétant

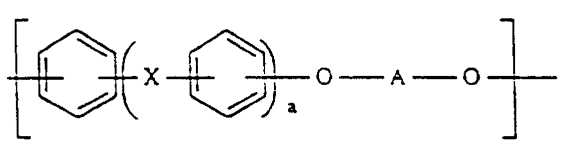

(II)

dans lesquelles à chaque fois a représente le nombre entier 1 ou 2, 50 à 100 % de X, rapportés à la quantité totale des liaisons X présentes dans les éléments de structure des formules I et II, représentent $-SO_2-$ et 0 à 50 % de X représentent -CO-, et A représente un coupe des formules IIIa-IIIg

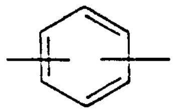 (IIIa), 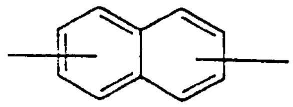 (IIIb),

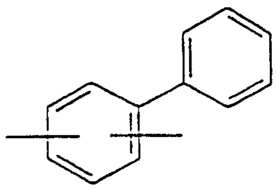 (IIIc), 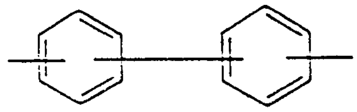 (IIId),

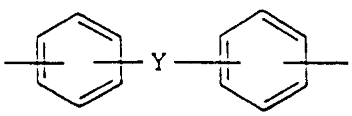 (IIIe), 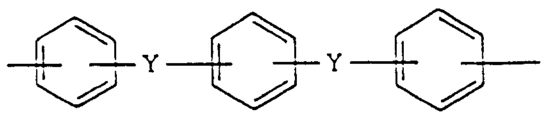 (IIIf)

ou

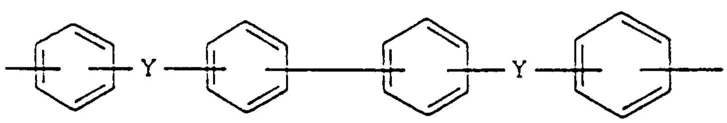 (IIIg),

dans lesquelles Y représente $-CH_2$, $-C(CH_3)_2-$, $-C(CF_3)_2-$, -S-, -SO-, $-SO_2-$ ou -O- et les cycles aromatiques dans les éléments de structure des formules I et II sont non substitués ou une fois ou plusieurs fois alkyle substitués, le résidu alkyle contenant de 1 à 4 atomes de carbone.

2. Polyarylèneéthers selon la revendication 1, qui contiennent 5-100 % en mol d'un élément de structure de la formule I se répétant et 95-0 % en mol d'un élément de structure de la formule II se répétant.

3. Polyarylèneéthers selon la revendication 1, qui contiennent 10-100 % en moi d'un élément de structure de la formule I se répétant et 90-0 % en mol d'un élément de structure de la formule II se répétant.

4. Polyarylèneéthers selon la revendication 1, dans lesquels A représente un groupe des formules IIIb, IIIId ou IIIe.

5. Polyarylèneéthers selon la revendication 1, dans lesquels A représente un groupe des formules IIIb, IIId ou IIIe, Y représentant -O-, $-C(CH_3)_2-$, -S- ou $-SO_2-$.

**6.** Polyarylèneéthers selon la revendication 1, dans lesquels A représente un des résidus suivants :

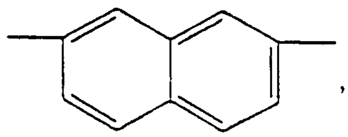
,
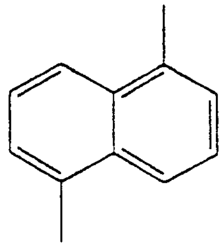
,
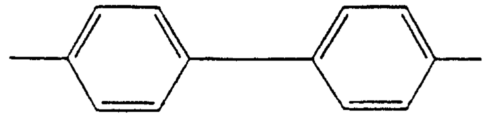

ou

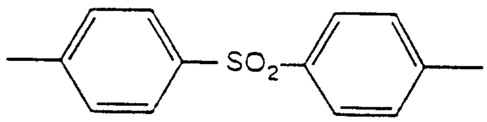

**7.** Polyarylèneéthers selon la revendication 1, dans lesquels X représente $-SO_2-$ et A représente le résidu de la formule IIIe, dans laquelle Y représente $-SO_2-$.

**8.** Procédé pour la préparation de polyarylèneéthers selon la revendication 1, caractérisé en ce qu'on polycondense un composé de la formule IV

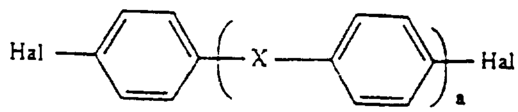
(IV),

dans laquelle a et X ont la même signification que dans la revendication 1 et Hal représente un halogène, en particulier le fluor ou le chlore, dans des quantités équimolaires avec du 2,2'-dihydroxybiphényle ou avec un mélange constitué de 2,2'-dihydroxybiphényle et d'un phénol contenu dans celui-ci jusqu'à 98 % en mol de la formule V

HO - A - OH (V),

dans laquelle A a la même signification que dans la revendication 1, en présence d'un alcali dans un solvant aprotique polaire, jusqu'à ce que le polyarylèneéther obtenu présente une viscosité réduite de 0,1 à 2,0, mesurée sur une solution à 1 % en poids à 25 °C dans de la N-méthylpyrrolidone.

**9.** Demi-produits moulés, revêtements ou feuilles contenant un polyarylèneéther selon la revendication 1.

**10.** Composé de fibres contenant des fibres de renforçage et comme résine de matrice un polyarylèneéther selon la revendication 1.

**11.** Utilisation des polyarylèneéthers selon la revendication 1 pour la modification de matières synthétiques, en particulier de résines époxydes ou de bismaléimides.

**Revendications pour l'Etat contractant suivant : ES**

**1.** Procédé pour la préparation de polyarylèneéthers qui contiennent, rapportés à la quantité totale des éléments de structure présents dans la résine de polyéther, 2-100 % en mol d'un élément de structure de la formule I se répétant

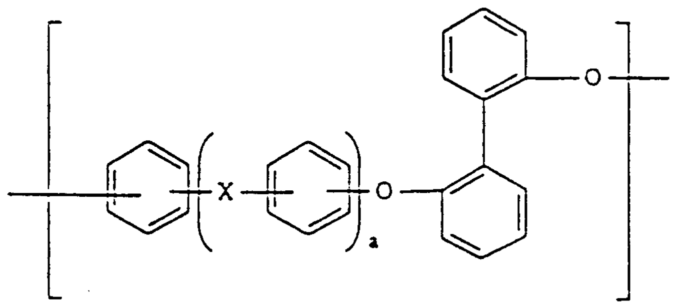

(I)

et 0-98 % en moi d'un élément de structure de la formule II se répétant

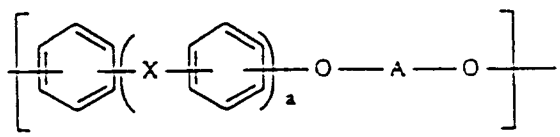

(II)

dans lesquelles à chaque fois a représente le nombre entier 1 ou 2, 50 à 100 % de X, rapportés à la quantité totale des liaisons X présentes dans les éléments de structure des formules I et II, représentent $-SO_2-$ et 0 à 50 % de X représentent -CO-, et A représente un groupe des formules IIIa-IIIg

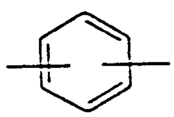 (IIIa), 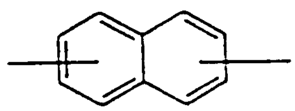 (IIIb),

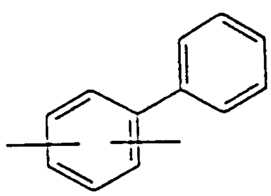 (IIIc), 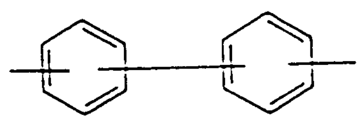 (IIId),

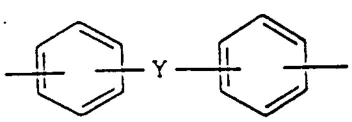 (IIIe), 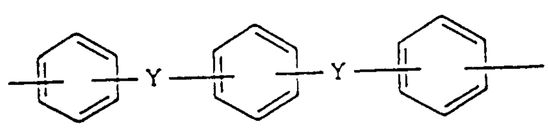 (IIIf)

ou

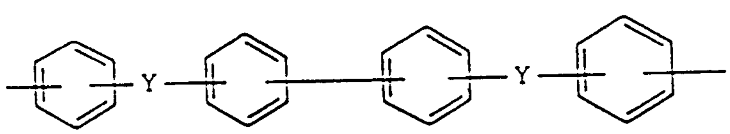 (IIIg),

dans lesquelles Y représente $-CH_2-$, $-C(CH_3)_2-$, $-C(CF_3)_2-$, -S-, -SO-, $-SO_2-$ ou -O- et les cycles aromatiques dans les éléments de structure des formules I et II sont non substitués ou une fois ou plusieurs fois alkyle substitués, le résidu alkyle contenant de 1 à 4 atomes de carbone, caractérisé en

ce qu'on polycondense un composé de la formule IV

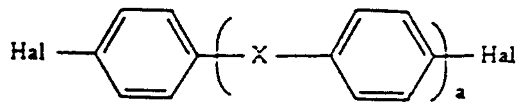

(IV),

dans laquelle a et X ont la même signification que dans la formule I et Hal représente un halogène, en particulier le fluor ou le chlore, dans des quantités équimolaires avec du 2,2'-dihydroxybiphényle ou avec un mélange constitué de 2,2'-dihydroxyphényle et d'un phénol contenu dans celui-ci jusqu'à 98 % en mol de la formule V

HO - A - OH (V)

dans laquelle A a la même signification que dans la revendication 1, en présence d'un alcali dans un solvant aprotique polaire, jusqu'à ce que le polyarylèneéther obtenu présente une viscosité réduite de 0,1 à 2,0, mesurée sur une solution à 1 % en poids à 25 °C dans de la N-méthylpyrrolidone.

**2.** Procédé selon la revendication 1, caractérisé en ce qu'on polycondense un composé de la formule IV dans des quantités équimolaires avec un mélange constitué de 2,2'-dihydroxybiphényle et d'un phénol contenu dans celui-ci jusqu'à 95 % en mol de la formule V, jusqu'à ce que le polyarylèneéther obtenu présente une viscosité réduite de 0,15 à 1,8 dl/g.

**3.** Procédé selon la revendication 1, caractérisé en ce qu'on polycondense un composé de la formule IV dans des quantités équimolaires avec un mélange constitué de 2,2'-dihydroxybiphényle et d'un phénol contenu dans celui-ci jusqu'à 90 % en mol de la formule V, jusqu'à ce que le polyarylèneéther obtenu présente une viscosité réduite de 0,2 à 1,2 dl/g.

**4.** Procédé selon la revendication 1, caractérisé en ce qu'on utilise à la place du 2,2'-dihydroxybiphényle ou du biphénol de la formule V les phénolates alcalins ou alcalino-terreux correspondants.